# EUROPEAN PATENT SPECIFICATION

(11) **EP 3 176 893 B1**
(45) Date of publication and mention of the grant of the patent: **03.03.2021**
(21) Application number: 15290298.7
(22) Date of filing: 02.12.2015
(51) Int. Cl.: H02H 7/08, H02K 11/02

(54) **WIPER MOTOR ACTUATING DEVICE FOR AN ELECTRICALLY DRIVABLE WIPER MOTOR**
WISCHERMOTORBETÄTIGUNGSVORRICHTUNG FÜR EINEN ELEKTRISCH ANTREIBBAREN WISCHERMOTOR
DISPOSITIF D'ACTIONNEMENT DE MOTEUR D'ESSUIE-GLACE DESTINÉ À UN MOTEUR D'ESSUIE-GLACE ENTRAÎNÉ ÉLECTRIQUEMENT

(43) Date of publication of application: 07.06.2017
(73) Proprietor: Robert Bosch GmbH, 70442 Stuttgart (DE); PSA Automobiles SA, 78300 Poissy (FR)
(72) Inventor: Dhainaut, Jean Marc, 75007 Paris (FR); Schneider, Christian, 70442 Stuttgart (DE); Robert, Raphael, 90160 Bessoncourt (FR); Braun, Peter, 70442 Stuttgart (DE); Kuderer, Alexander, 70442 Stuttgart (DE)

(56) References cited:
- DE-A1-102005 040 196
- GB-A- 2 256 982
- JP-A- 2012 147 570
- US-A- 4 795 951

## Description

### Prior Art

Wiper motor actuating devices for electrically drivable wiper motors, comprising at least one filtering unit to compensate voltage errors in an electric circuit, are well-known. Wiper motors driven by a direct current generate electric disturbances on their supply lines. To limit these disturbances, filtering components are integrated.

The document GB 2,256,982 A discloses a vehicle windshield wiper circuit with a wiper motor, a switching circuit and an interference suppression capacitor to suppress noise. The vehicle windshield wiper circuit comprises a fuse element, which is connected to the interference suppression capacitor.

### Summary of the Invention

The invention is defined in claim 1 and relates to a wiper motor actuating device for an electrically drivable wiper motor, comprising at least one filtering unit to compensate voltage errors generated by the wiper motor in an electric circuit and at least one fuse element for interrupting an electric circuit in case of a failure of the at least one filtering unit. It is suggested, that the at least one fuse element is electrically connected between a ground electric circuit of the at least one filtering unit and a ground of the wiper motor, wherein the at least one fuse element is provided to interrupt the ground electric circuit if a current in the at least one filtering unit exceeds a predetermined threshold value. A damage or a thermal event of the wiper motor in case of a failure of the at least one filtering unit can advantageously be avoided by an interrupt of the electric circuit. Furthermore, other vehicle electronic components, as e.g. an electronic throttle control, can advantageously be protected from electrical disturbances by switching off the wiper motor in case of failure of the filtering unit. A short circuit or an overcurrent in case of a failure of the at least one filtering unit can advantageously be avoided.

Preferably, the wiper motor is formed by a DC motor. The electrically drivable wiper motor is connected within the electric circuit. The wiper motor can preferably be operated at 12 V. Moreover, it is quite conceivable to use a wiper motor, which is operated at 24 V or 48 V. The wiper motor is embodied as a single-speed motor (e.g. a rear wiper motor), a dual-speed motor or a multiple-speed motor. Preferably the electric circuit is supplied by a power supply unit, which delivers a voltage of 12 VDC, or alternatively 24 VDC or 48 VDC.

The wiper motor actuating device may also be applicable to other electrical motors such as pumps (front and rear washer, headlamps washer, water, oil, air, vacuum), engine cooling fans, climate fans and/or window lifts. In particular, the electrically drivable wiper motor is applicable in cars, light commercial vehicles, trucks, coaches, buses, motor cycles, building site machines, agricultural machines, handling gears, military vehicles, trains, subway trains, trams, boats, planes, helicopters and/or space ships. The wiper motor is used to drive a wiper system, which is connected to a wiper arm. Thus, the wiper arm and a connected wiper blade are movable over a windscreen by the wiper motor.

Moreover, it is proposed that the at least one filtering unit comprises at least one overvoltage protection unit to limit an overvoltage generated by the wiper motor in a first electric circuit. Advantageously, the at least one filtering unit comprises at least one inductor, at least one capacitor and/or at least one overvoltage suppressor such as a transient-voltage-suppression diode (TVS) or a varistor. Thereby a safe operation of the wiper motor can advantageously be achieved. The electric circuit and other electronic components can be protected from the overvoltage easily.

Furthermore, it is proposed that the at least one fuse element is electrically connected in series with the wiper motor and the at least one filtering unit. Thus, this fuse element can be dimensioned in correlation with the current generated by a failure of the overvoltage suppressor and a safe interrupt of the circuit can advantageously be achieved if the at least one filtering unit fails.

The at least one fuse element is electrically connected between the wiper motor and the at least one filtering unit. Therefore, a safe interrupt of the circuit can advantageously be achieved if the at least one filtering unit fails.

It is further proposed that the at least one fuse element is removable. Thus a quick and easy exchange of the at least one fuse element can be achieved. Alternatively, the at least one fuse element can be welded and/or soldered.

Moreover, it is proposed that the at least one fuse element comprises a thermal switch. Thereby an overheating of the wiper motor can advantageously be avoided. The thermal switch may be a bimetallic strip and/or a bimetallic dome-shaped cap which contacts an inside-out inverted cap shape when heated. Preferably, the thermal switch is a positive temperature coefficient (PTC) thermistor.

It is further proposed that the at least one fuse element is resettable. Thus, a comfortable reset of the fuse element after an interrupt of the electric circuit can be achieved.

Moreover, it is proposed that the at least one fuse element is directly integrated in a lead frame. Therefore, the at least one fuse element can be connected in a significantly cost-effective manner to the electric circuit.

Furthermore, it is proposed that the wiper motor actuating device comprises at least one power input for connecting to a power switch and/or for connecting to a speed switch. Therefore, a simple electric coupling with electric car components can be provided. The power input is advantageously provided to conduct an electric current for driving the wiper motor.

In addition, it is proposed that the at least one filtering unit comprises at least one second overvoltage protection unit to protect a second electric circuit from an overvoltage generated by the wiper motor. Thus a safe operation of the wiper motor can advantageously be achieved in a two-speed operation mode.

Moreover, a system is proposed, comprising a wiper motor actuating device and an electronic control unit for detecting at least one state of the at least one fuse element. Thus, a user can advantageously be informed about a fault state of the at least one filtering unit of the wiper motor actuating device. Advantageously, the wiper motor actuating device comprises an idle switch, which delivers a signal to the electronic control unit if the driven wiper blade is in an idle position. In normal operation, the idle switch state changes at each cycle of the wiper system and the information delivered by the idle switch is primarily used to detect the idle position of the wiper blade in order to properly stop the wiper motor when the wiper system is switched off. For this purpose, the electronic control unit switches off the power switch, which results in a short circuit to a ground of the wiper motor and allows stopping the motor quickly. The information delivered by the idle switch can also be used to detect a blockage of the wiper system, for example due to snow or ice on the windshield. If the signal of the idle switch does not change during a period corresponding to at least one cycle of the wiper, the electronic control unit stops the wiper motor by switching off the power switch in order to protect the wiper system. It is proposed to use the information delivered by the idle switch to detect the state of the fuse. For this purpose, the idle switch is connected to the ground via the fuse. If the fuse element interrupts the electric circuits, the signal of the idle switch does not change anymore and consequently, after a period corresponding to at least one cycle of the wiper, the electronic control unit stops the wiper motor by switching off the power switch. Thus, in case of failure of a filtering unit, the electronic control unit stops the wiper motor, thus protecting other electronic components from being damaged or disturbed by the overvoltage generated by the wiper motor. The electronic control unit is provided to analyze the signal indicating the failure of the fuse element to a user, e.g. via a lamp or via a message on a screen.

Furthermore, it is proposed that the system comprises an overcurrent protection unit, which is built separately from the at least one fuse element. Therefore, an additional protection of the wiper motor actuating device can be achieved. Advantageously, the overcurrent protection unit is directly connected to a battery, to a main battery fuse or to a power switch. Moreover, the overcurrent protection unit in particular comprises a fuse.

Beyond this it is proposed that the system comprises a power switch and a speed switch, wherein the overcurrent protection unit is electrically connected between the power switch and the speed switch. Thus, a fuse of the overcurrent protection unit can advantageously easily be exchanged by a user following an interrupt of the electric circuit by the fuse. The overcurrent protection unit can also comprise two fuses, respectively one on each output of the speed switch or respectively one on each input of the power switch.

### Brief description of the drawings

Further objects, features and advantages of the present invention will become apparent from reading the following detailed description, taking into account the accompanying drawing wherein a particular embodiment of the invention is disclosed as an exemplary embodiment.

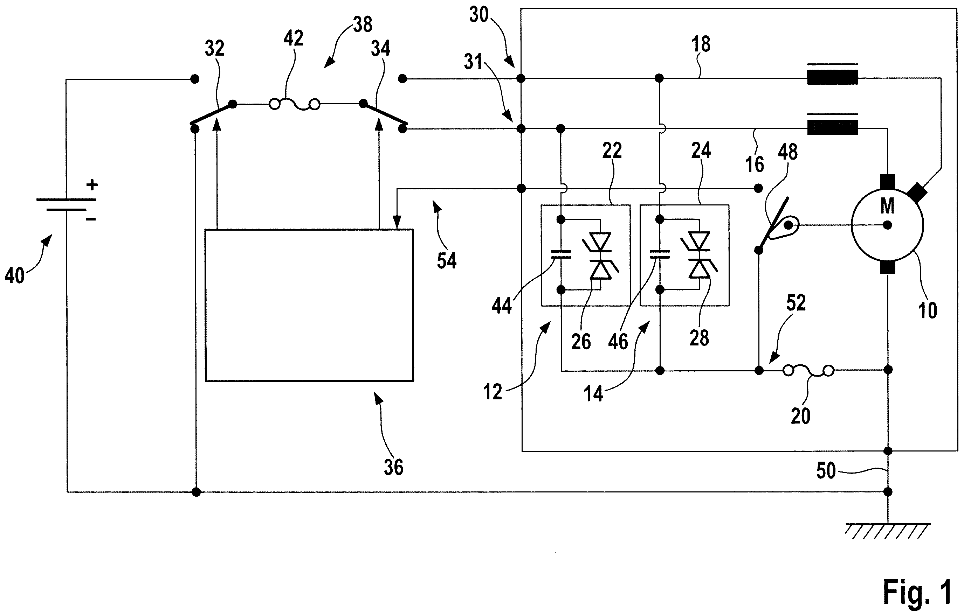

Fig. 1 shows an electrical drawing of a wiper motor actuating device, an electronic control unit and a battery according to the invention.

### Detailed description of the exemplary embodiment

Figure 1 shows an electric wiper system for a vehicle, comprising a wiper motor actuating device, an electronic control unit 36 and a power supply unit 40. The power supply unit 40 comprises a battery. The power supply unit 40 delivers an electric current with a DC voltage of 12 Volts. The system comprises a power switch 32. The power switch 32 is provided for a wiper mode of the electric wiper system. The power switch 32 is directly connected to the battery of the power supply unit 40 by an "on"-position and to a ground 50 by an "off"-position. Thus, the power switch 32 allows breaking the wiper system quickly when it is switched off by making a short circuit at the connections of wiper motor. Moreover, the system comprises an overcurrent protection unit 38. The overcurrent protection unit 38 comprises a fuse 42. The fuse 42 forms a blade fuse. The overcurrent protection unit 38 is directly connected to the power switch 32.

The system further comprises a speed switch 34. The speed switch 34 is directly connected to the overcurrent protection unit 38. The overcurrent protection unit 38 is electrically connected between the power switch 32 and the speed switch 34. Via the speed switch 34, a user can switch between two electric circuits 16, 18. The wiper motor actuating device comprises two power inputs 30, 31 for respectively connecting to two outputs of the speed switch 34. The power inputs 30, 31 comprise a connector (not shown).

The system comprises a wiper motor 10. The wiper motor 10 is electrically drivable by the wiper motor actuating device. The wiper motor 10 is embodied by a DC motor. The wiper motor 10 is provided to be operated at a voltage of 12 VDC. The wiper motor 10 is connected to the electric circuits 16, 18. Depending on the activated electric circuit 16, 18, the wiper motor 10 drives at a respectively different speed. In the shown embodiment, the wiper motor 10 forms a two-speed wiper motor (also called dual-speed wiper motor). The wiper motor 10 is used to drive a wiper system (not shown). The wiper system is connected to a not shown wiper arm. The wiper arm and a connected wiper blade are movable over a windscreen, driven by the wiper motor 10.

To compensate voltage errors in the electric circuits 16, 18, generated by the wiper motor 10, the wiper motor actuating device comprises two filtering units 12, 14. The first filtering unit 12 is arranged in the first electric circuit 16. The second filtering unit 14 is arranged in the second electric circuit 18. The first filtering unit 12 comprises an overvoltage protection unit 22 to protect the first electric circuit 16 from an overvoltage generated by the wiper motor 10. The second filtering unit 14 comprises a second overvoltage protection unit 24 to protect the second electric circuit 18 from an overvoltage generated by the wiper motor 10. Each of the overvoltage protection units 22, 24 comprises a capacitor 44, 46 and a transient-voltage-suppression diode 26, 28.

The wiper motor actuating device comprises one fuse element 20 for interrupting a ground electric circuit 52 in case of a failure of the first filtering unit 12. The fuse element 20 is further provided for interrupting the ground electric circuit 52 in case of a failure of the second filtering unit 14. The overcurrent protection unit 38 is embodied separately from the fuse element 20. The fuse element 20 is electrically connected in series with the wiper motor 10 and the filtering units 12, 14. The fuse element 20 is electrically connected between the wiper motor 10 and the filtering units 12, 14.

The fuse element 20 is removable. It is also possible that the fuse element 20 is welded and/or soldered within the electric circuits 16, 18. The fuse element 20 comprises a thermal switch. The thermal switch is implemented as a positive temperature coefficient thermistor (PTC). The fuse element 20 is resettable. The fuse element 20 is integrated into a lead frame (not shown). The fuse element 20 is provided to interrupt the ground electric circuit 52 if a current in the filtering units exceeds a predetermined threshold value. The fuse element 20 is arranged separately from the filtering units 12, 14 and from the overvoltage protection units 22, 24.

The electronic control unit 36 is provided for detecting a state of the fuse element 20. In detail, the wiper motor actuating device comprises an idle switch 48, which delivers a signal 54 to the electronic control unit 36 if the driven wiper blade is in an idle position. In normal operation, an idle switch state of the idle switch 48 changes at each cycle of the wiper system. The signal 54 delivered by the idle switch 48 is primarily used to detect the idle position of the wiper blade in order to properly stop the wiper motor 10 when the wiper system is switched off. For that purpose, the electronic control unit 36 switches off the power switch 32, which results in a short circuit to a ground 50 of the wiper motor 10 and allows stopping the wiper motor 10 quickly. The signal 54 delivered by the idle switch 48 is also used to detect a blockage of the wiper system, for example due to snow or ice on the windshield. If the signal 54 of the idle switch 48 does not change during a period corresponding to at least a cycle of the wiper system, the electronic control unit 36 stops the wiper motor 10 by switching off the power switch 32 in order to protect the wiper system. The signal 54 delivered by the idle switch 48 is also used to detect the state of the fuse 20.

If the fuse element 20 interrupts the ground electric circuit 52, the signal 54 of the idle switch 48 does not change anymore and consequently, after a period corresponding to at least a cycle of the wiper, the electronic control unit 36 stops the wiper motor 10 by switching off the power switch, what interrupts the electric circuits 16, 18. The electronic control unit 36 is provided to analyze the signal 54 indicating the failure of the fuse element 20 to a user, e.g. via a lamp or via a message on a screen. Thus, the electronic control unit 36 is provided to diagnose a state of the fuse element 20.

## Claims

1. A wiper motor actuating device for an electrically drivable wiper motor (10), comprising: at least one filtering unit (12, 14) to compensate voltage errors generated by the wiper motor (10) in an electric circuit (16, 18), and at least one fuse element (20) for interrupting a ground electric circuit (52) in case of a failure of the at least one filtering unit (12, 14), **characterized in that** the at least one fuse element (20) is electrically connected between a ground electric circuit (52) of the at least one filtering unit (12, 14) and a ground (50) of the wiper motor (10), wherein the at least one fuse element (20) is provided to interrupt the ground electric circuit (52) if a current in the at least one filtering unit (12, 14) exceeds a predetermined threshold value.

2. The wiper motor actuating device as defined in Claim 1, wherein the at least one fuse element (20) is electrically connected in series with the wiper motor (10) and the at least one filtering unit (12, 14).

3. The wiper motor actuating device as defined in any one of the preceding Claims, wherein the at least one fuse element (20) is removable.

4. The wiper motor actuating device as defined in any one of the preceding Claims, wherein the at least one fuse element (20) comprises a thermal switch.

5. The wiper motor actuating device as defined in any one of the preceding Claims, wherein the at least one fuse element (20) is resettable.

6. The wiper motor actuating device as defined in any one of the preceding Claims, wherein the at least one fuse element (20) is directly integrated in a lead frame.

7. The wiper motor actuating device as defined in any one of the preceding Claims, comprising at least one power input (30) for connecting to a power switch (32) and/or for connecting to a speed switch (34).

8. A system, comprising the wiper motor actuating device as defined in any one of the preceding Claims and further comprising a wiper motor (10).

9. The system as defined in Claim 8, comprising an electronic control unit (36) for detecting at least one state of the at least one fuse element (20).

10. The system as defined in one of Claims 8 or 9, comprising an overcurrent protection unit (38), which is embodied separately from the at least one fuse element (20).

11. The system as defined in Claim 10, comprising a power switch (32) and a speed switch (34), wherein the overcurrent protection unit (38) is electrically connected between the power switch (32) and the speed switch (34).

12. A vehicle, comprising a system at least as defined in Claim 8.

## Patentansprüche

1. Wischermotorbetätigungsvorrichtung für einen elektrisch antreibbaren Wischermotor (10), umfassend:
mindestens eine Filtereinheit (12, 14) zum Kompensieren von durch den Wischermotor (10) erzeugten Spannungsfehlern in einer elektrischen Schaltung (16, 18) und mindestens ein Sicherungselement (20) zum Unterbrechen eines Massestromkreises (52) im Falle eines Ausfalls der mindestens einen Filtereinheit (12, 14), **dadurch gekennzeichnet, dass** das mindestens eine Sicherungselement (20) elektrisch zwischen einen Massestromkreis (52) der mindestens einen Filtereinheit (12, 14) und eine Masse (50) des Wischermotors (10) geschaltet ist, wobei das mindestens eine Sicherungselement (20) dazu vorgesehen ist, den Massestromkreis (52) zu unterbrechen, wenn ein Strom in der mindestens einen Filtereinheit (12, 14) einen vorbestimmten Schwellenwert überschreitet.

2. Wischermotorbetätigungsvorrichtung gemäß Anspruch 1, wobei das mindestens eine Sicherungselement (20) elektrisch in Reihe mit dem Wischermotor (10) und der mindestens einen Filtereinheit (12, 14) geschaltet ist.

3. Wischermotorbetätigungsvorrichtung gemäß einem der vorhergehenden Ansprüche, wobei das mindestens eine Sicherungselement (20) entfernbar ist.

4. Wischermotorbetätigungsvorrichtung gemäß einem der vorhergehenden Ansprüche, wobei das mindestens eine Sicherungselement (20) einen Thermoschalter umfasst.

5. Wischermotorbetätigungsvorrichtung gemäß einem der vorhergehenden Ansprüche, wobei das mindestens eine Sicherungselement (20) zurücksetzbar ist.

6. Wischermotorbetätigungsvorrichtung gemäß einem der vorhergehenden Ansprüche, wobei das mindestens eine Sicherungselement (20) in einem Leiterrahmen integriert ist.

7. Wischermotorbetätigungsvorrichtung gemäß einem der vorhergehenden Ansprüche, umfassend mindestens einen Stromeingang (30) zum Anschluss an einen Stromschalter (32) und/oder zum Anschluss an einen Geschwindigkeitsschalter (34).

8. System, umfassend die Wischermotorbetätigungsvorrichtung gemäß einem der vorhergehenden Ansprüche und ferner umfassend einen Wischermotor (10).

9. System gemäß Anspruch 8, umfassend eine elektronische Steuereinheit (36) zum Erkennen mindestens eines Zustands des mindestens einen Sicherungselements (20) .

10. System gemäß einem der Ansprüche 8 oder 9, umfassend eine Überstromschutzeinheit (38), die getrennt von dem mindestens einen Sicherungselement (20) verkörpert ist.

11. System gemäß Anspruch 10, umfassend einen Stromschalter (32) und einen Geschwindigkeitsschalter (34), wobei die Überstromschutzeinheit (38) elektrisch zwischen den Stromschalter (32) und den Geschwindigkeitsschalter (34) geschaltet ist.

12. Fahrzeug, umfassend ein System mindestens gemäß Anspruch 8.

## Revendications

1. Dispositif d'actionnement de moteur d'essuie-glace pour un moteur (10) d'essuie-glace pouvant être entraîné électriquement, comportant : au moins une unité (12, 14) de filtrage servant à compenser des erreurs de tension générées par le moteur (10) d'essuie-glace dans un circuit électrique (16, 18), et au moins un élément fusible (20) destiné à interrompre un circuit électrique (52) de terre en cas de défaillance de l'unité ou des unités (12, 14) de filtrage, **caractérisé en ce que** l'élément ou les éléments fusibles (20) sont raccordés électriquement entre un circuit électrique (52) de terre de l'unité ou des unités (12, 14) de filtrage et une terre (50) du moteur (10) d'essuie-glace, l'élément ou les éléments fusibles (20) étant mis en place pour interrompre le circuit électrique (52) de terre si un courant dans l'unité ou les unités (12, 14) de filtrage dépasse une valeur seuil prédéterminée.

2. Dispositif d'actionnement de moteur d'essuie-glace selon la revendication 1, l'élément ou les éléments fusibles (20) étant raccordés électriquement en série avec le moteur (10) d'essuie-glace et l'unité ou les unités (12, 14) de filtrage.

3. Dispositif d'actionnement de moteur d'essuie-glace selon l'une quelconque des revendications précédentes, l'élément ou les éléments fusibles (20) étant amovibles.

4. Dispositif d'actionnement de moteur d'essuie-glace selon l'une quelconque des revendications précédentes, l'élément ou les éléments fusibles (20) comportant un interrupteur thermique.

5. Dispositif d'actionnement de moteur d'essuie-glace selon l'une quelconque des revendications précédentes, l'élément ou les éléments fusibles (20) étant réinitialisables.

6. Dispositif d'actionnement de moteur d'essuie-glace selon l'une quelconque des revendications précédentes, l'élément ou les éléments fusibles (20) étant directement intégrés dans une grille de connexion.

7. Dispositif d'actionnement de moteur d'essuie-glace selon l'une quelconque des revendications précédentes, comportant au moins une entrée (30) de puissance destinée à se connecter à un interrupteur (32) de puissance et/ou à se connecter à un interrupteur (34) de vitesse.

8. Système comportant le dispositif d'actionnement de moteur d'essuie-glace selon l'une quelconque des revendications précédentes et comportant en outre un moteur (10) d'essuie-glace.

9. Système selon la revendication 8, comportant une unité (36) de commande électronique destinée à détecter au moins un état de l'élément ou des éléments fusibles (20) .

10. Système selon l'une des revendications 8 et 9, comportant une unité (38) de protection contre les surintensités, qui est réalisée séparément de l'élément ou des éléments fusibles (20).

11. Système selon la revendication 10, comportant un interrupteur (32) de puissance et un interrupteur (34) de vitesse, l'unité (38) de protection contre les surintensités étant raccordée électriquement entre l'interrupteur (32) de puissance et l'interrupteur (34) de vitesse.

12. Véhicule comportant un système au moins selon la revendication 8.
